# EUROPEAN PATENT APPLICATION

(11) **EP 4 488 005 A1**
(43) Date of publication of application: **08.01.2025**
(21) Application number: 23763185.8
(22) Date of filing: 07.02.2023
(51) Int. Cl.: B25F 5/00, B24B 23/00

(54) **WORK MACHINE**

(30) Priority: 04.03.2022 JP 2022033976
(71) Applicant: Koki Holdings Co., Ltd., Tokyo 108-6020 (JP)
(72) Inventor: SAKAGAMI Koichi, Hitachinaka-City Ibaraki 312-8502 (JP); MASHIKO Hironori, Hitachinaka-City Ibaraki 312-8502 (JP); KAWANO Yoshikazu, Hitachinaka-City Ibaraki 312-8502 (JP); SHINTO Shunya, Hitachinaka-City Ibaraki 312-8502 (JP)
(74) Representative: Meissner Bolte Partnerschaft mbB
(86) International application number: PCT/JP2023/003915
(87) International publication number: WO 2023/166923

(57) **Abstract**

Provided is a work machine that offers good operability. A work machine 1 comprises: a motor 6; a work unit that is driven by the motor 6 and configured so as to be able to carry out prescribed work; a microcomputer 98 for controlling the motor 6; and an operating unit that is configured so as to be able to instruct the microcomputer 98 to drive/halt the motor 6. The microcomputer 98 is configured to perform control so as to: cause the motor 6 to be driven continuously by normal operation during a single drive operation of the operating unit; lower the output of the motor 6 by reducing the duty with respect to normal operation when the motor 6 enters an overload state; and then, upon detection of the rotation of the motor 6, return to normal operation.

## Description

### Technical Field

The present invention relates to a work machine such as a grinder.

### Description of Related Art

Patent Literature 1 listed below discloses a work machine having an overcurrent protection function that halts the motor when an overcurrent state (overload state) occurs. In order to re-drive the motor that has halted due to the overcurrent protection function, pulling the trigger again (operating the switch again) is needed.

### Related Art

### Patent Literature

Patent Literature 1: Japanese Patent Application Laid-Open No. 2020-93369

### SUMMARY

### Technical Problem

A configuration in which the trigger has to be pulled again every time an overcurrent state occurs may result in poor operability.

An object of the present invention is to provide a work machine with good operability. Solution to the Problem

An embodiment of the present invention is a work machine. The work machine includes: a motor; a work unit which is configured to be driven by the motor and be capable of performing predetermined work; a control unit which is configured to control the motor; an operating unit which is configured to instruct the control unit to drive/halt the motor; and a rotation detection unit which detects rotation of the motor. The control unit is configured to execute a first control for continuously driving the motor during a single drive operation of the operating unit, shift to a second control in which output of the motor is lower than the first control when the motor becomes overloaded, and shift to a third control in which the output of the motor is higher than the second control when the rotation of the motor is detected by the rotation detection unit.

The present invention may be expressed as an "electric work machine," "power tool," "electrical equipment," etc., and such expressions are also effective as aspects of the present invention.

### Effects

According to the present invention, a work machine with good operability can be provided.

### BRIEF DESCRIPTION OF THE DRAWINGS

FIG. 1 is a plan view of a work machine 1 according to an embodiment of the present invention.
FIG. 2 is a side sectional view of the work machine 1.
FIG. 3 is a circuit block diagram of the work machine 1.
FIG. 4 is a circuit block diagram of a work machine 1A according to another configuration example of the embodiment.
FIG. 5 is a flowchart showing a first example of control of the work machines 1 and 1A.
FIG. 6 is a flowchart showing a second example of control of the work machines 1 and 1A.
FIG. 7 is a time chart showing an example of the operation of the work machines 1 and 1A when the control shown in FIG. 5 is applied.
FIG. 8 is a time chart showing an example of the operation of the work machines 1 and 1A when another example of the control shown in FIG. 5 (an example with a return to normal operation from a duty of 2.5%) is applied.
FIG. 9 is a time chart showing an example of the operation of the work machines 1 and 1A when the control shown in FIG. 6 is applied.

### DESCRIPTION OF EMBODIMENTS

Hereinafter, the same or equivalent constituent elements, members, etc. shown in each of drawings are denoted by the same reference numerals, and duplication of description will be omitted as appropriate. The embodiments are illustrative rather than limiting. All features and combinations thereof described in the embodiments are not necessarily essential to the invention.

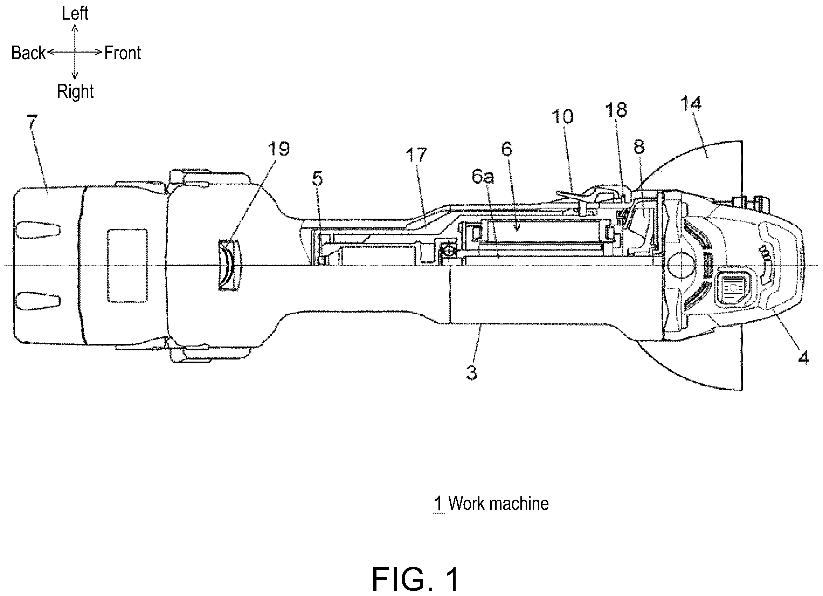

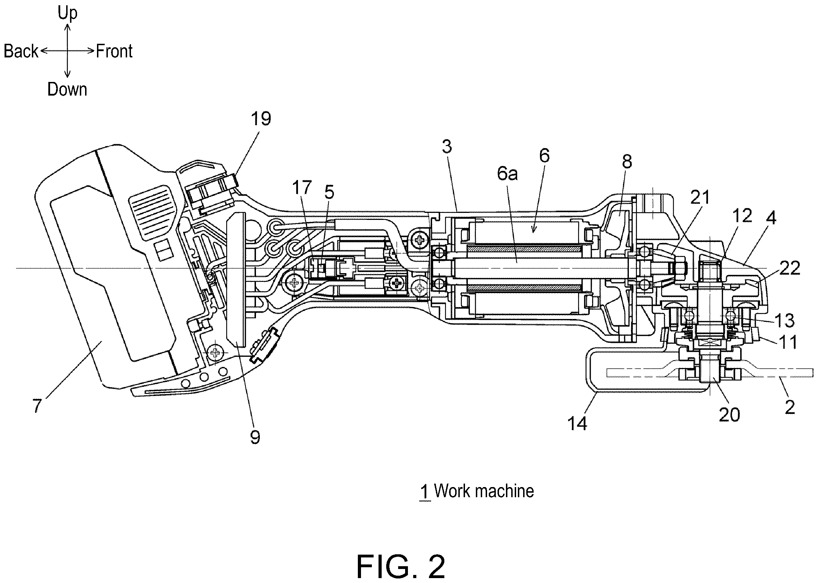

The embodiment relates to a work machine 1. The work machine 1 is a grinder (disc grinder). According to FIGS. 1 and 2, front-back, up-down, and left-right directions of the work machine 1, which are perpendicular to each other, are defined. The front-back direction is a direction parallel to an output shaft 6a of a motor 6. The up-down direction is a direction parallel to a central axis of a spindle 20.

As shown in FIG. 2, the work machine 1 includes a grindstone 2 as a work unit (rotary tool). The work machine 1 can perform predetermined work such as grinding work and cutting work by means of the grindstone 2 that is rotationally driven by the motor 6 which will be described later. The work machine 1 includes a housing 3 (made of resin, for example) and a gear case 4.

The housing 3 is, for example, a resin molded body having a substantially cylindrical shape as a whole, and accommodates and holds the motor 6 and the like. A battery 7, which serves as a power source for the work machine 1, is removably attached to a rear end unit of the housing 3.

The gear case 4 is made of metal such as aluminum alloy, and is fixedly attached to a front end unit of the housing 3 with a screw or the like. The work machine 1 includes a packing land 11 as a lid member that closes a lower opening of the gear case 4.

The work machine 1 includes the motor 6 within the housing 3. The motor 6 is, for example, an inner rotor brushless motor with a 4-pole 6-slot configuration. A front end unit of the output shaft 6a of the motor 6 is located within the gear case 4, and a first bevel gear 21 is provided at the front end unit.

A fan 8 for cooling the motor 6 and the like is provided on the output shaft 6a. The fan 8 is located in the housing 3 in front of the main body of the motor 6 (the portion of the motor 6 excluding the output shaft 6a).

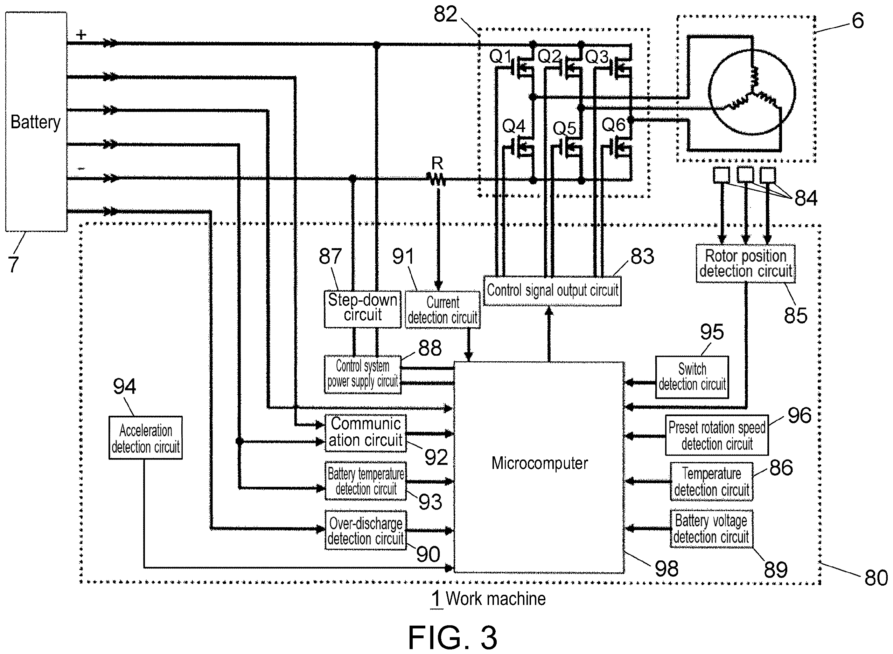

The work machine 1 includes a switch 5 located behind the motor 6 within the housing 3. The on state of the switch 5 is a state in which a microcomputer 98 in FIG. 3 is instructed to drive the motor 6. The off state of the switch 5 is a state in which the microcomputer 98 is instructed to halt the motor 6.

As shown in FIG. 1, the work machine 1 includes an operating unit 10 on the front part of the left side surface of the housing 3, through which a user turns the switch 5 on/off, that is, instructs the microcomputer 98 to drive/halt the motor 6. The work machine 1 includes a slide bar 17 in the housing 3 that moves in the front-back direction in conjunction with the front-back operation of the operating unit 10.

When the user performs a drive operation to move the operating unit 10 forward, the slide bar 17 moves forward in conjunction with the drive operation, and the switch 5 is turned on. When the user performs a stop operation to move the operating unit 10 backward, the slide bar 17 moves backward in conjunction with the stop operation, and the switch 5 is turned off.

The housing 3 includes a locking convex unit 18 on the front part of the left side surface. By hooking the operating unit 10 on the locking convex unit 18, the operating unit 10 is locked in a forwardly moved state, and the switch 5 can be maintained in the on state even if the operating unit 10 is released.

As shown in FIG. 2, the work machine 1 includes a control board 9 at the rear end unit inside the housing 3. The control board 9 is equipped with elements necessary for drive control of the motor 6, such as an inverter circuit 82 and the microcomputer 98 shown in FIG. 3.

The work machine 1 includes a speed setting dial 19 on the rear upper surface of the housing 3. The user can switch the preset rotation speed (speed of preset rotation) of the motor 6 by operating the speed setting dial 19.

The gear case 4 and the packing land 11 rotatably hold the spindle 20. The gear case 4 is provided with a needle bearing 12 that rotatably supports the upper end unit of the spindle 20. The packing land 11 holds a ball bearing 13 that rotatably supports the intermediate unit of the spindle 20.

The center axis of the spindle 20 is perpendicular to the output shaft 6a of the motor 6. One end of the spindle 20 passes through the packing land 11 and projects to the outside. A second bevel gear 22 is provided (attached) to the upper part of the spindle 20 located inside the gear case 4. The second bevel gear 22 meshes with the first bevel gear 21.

The rotation of the motor 6 is transmitted to the spindle 20 with the rotation direction changed by 90 degrees by the first bevel gear 21 and the second bevel gear 22, and the rotation speed is reduced. That is, the spindle 20 is rotationally driven by the motor 6.

The grindstone 2 is fixed to the spindle 20 and rotates integrally with the spindle 20. A foil guard 14 is attached to the packing land 11 and covers about half of the grindstone 2 to prevent scattering of cutting powder, sparks, etc. generated during grinding work.

When the user operates the operating unit 10, power is supplied from the battery 7 to the motor 6, the output shaft 6a of the motor 6 rotates, the spindle 20 rotates via the first bevel gear 21 and the second bevel gear 22, and the grindstone 2 fixed to the spindle 20 rotates.

FIG. 3 is a circuit block diagram of the work machine 1. The work machine 1 includes a control circuit unit 80, the inverter circuit 82, and a magnetic sensor 84. The control circuit unit 80 includes a control signal output circuit 83, a rotor position detection circuit 85, a temperature detection circuit 86, a step-down circuit 87, a control system power supply circuit 88, a battery voltage detection circuit 89, an over-discharge detection circuit 90, a current detection circuit 91, a communication circuit 92, a battery temperature detection circuit 93, an acceleration detection circuit 94, a switch detection circuit 95, a preset rotation speed detection circuit 96 and the microcomputer 98 (microcontroller) as a control unit.

The inverter circuit 82 includes three-phase bridge-connected semiconductor switching elements Q1 to Q6. The inverter circuit 82 converts the direct current (DC) power output by the battery 7 into alternating current (AC) power for driving the motor 6 and supplies the AC power to the motor 6. The control signal output circuit 83 applies a drive signal, for example, a Pulse Width Modulation (PWM) signal, to each of gates of the switching elements Q1 to Q6 under the control of the microcomputer 98.

The magnetic sensors 84 are, for example, Hall ICs, and are provided at 60° intervals in the rotational direction of the motor 6. The magnetic sensor 84 detects the magnetic field generated by the rotor of the motor 6 and transmits the magnetic field to the rotor position detection circuit 85. The rotor position detection circuit 85 detects the rotor position of the motor 6 based on the signal from the magnetic sensor 84 and transmits the rotor position to the microcomputer 98. The magnetic sensor 84 and the rotor position detection circuit 85 constitute a rotation detection unit. The temperature detection circuit 86 detects the temperatures of the switching elements Q1 to Q6 and transmits the temperatures to the microcomputer 98.

The step-down circuit 87 steps down the output voltage of the battery 7 and supplies the output voltage to the control system power supply circuit 88. The control system power supply circuit 88 converts the output voltage of the step-down circuit 87 into a power supply voltage for the microcomputer 98 or the like, and supplies the voltage to the microcomputer 98 or the like. The battery voltage detection circuit 89 detects the output voltage of battery 7 and transmits the output voltage to the microcomputer 98.

The over-discharge detection circuit 90 detects an over-discharge notification signal from the battery 7 and transmits the signal to the microcomputer 98. The current detection circuit 91 detects a motor current based on the voltage of a resistor R provided in the path of a current flowing through the motor 6 (motor current), and transmits the current to the microcomputer 98. The resistor R and the current detection circuit 91 constitute a current detection unit. The communication circuit 92 is a circuit for communication between the battery 7 and the microcomputer 98. The battery temperature detection circuit 93 detects a temperature notification signal from the battery 7 and transmits the signal to the microcomputer 98.

The acceleration detection circuit 94 detects acceleration applied to the work machine 1 and transmits the acceleration to the microcomputer 98. The switch detection circuit 95 detects the operation of the operating unit 10, that is, the on/off state of the switch 5, and transmits the operation to the microcomputer 98. The preset rotation speed detection circuit 96 detects the preset rotation speed by the speed setting dial 19 and transmits the preset rotation speed to the microcomputer 98.

The microcomputer 98 is configured to control the inverter circuit 82 via the control signal output circuit 83 according to the operation of the operating unit 10, that is, the on/off of the switch 5, and the preset rotation speed set by the speed setting dial 19, for example, perform PWM control, and control the drive of the motor 6. The microcomputer 98 can change an effective value of the applied voltage applied to the motor 6 (hereinafter referred to as "motor applied voltage") by changing the duty of PWM control (hereinafter referred to as "duty"). The microcomputer 98 can change the output of the motor 6 by controlling the effective value of the motor applied voltage.

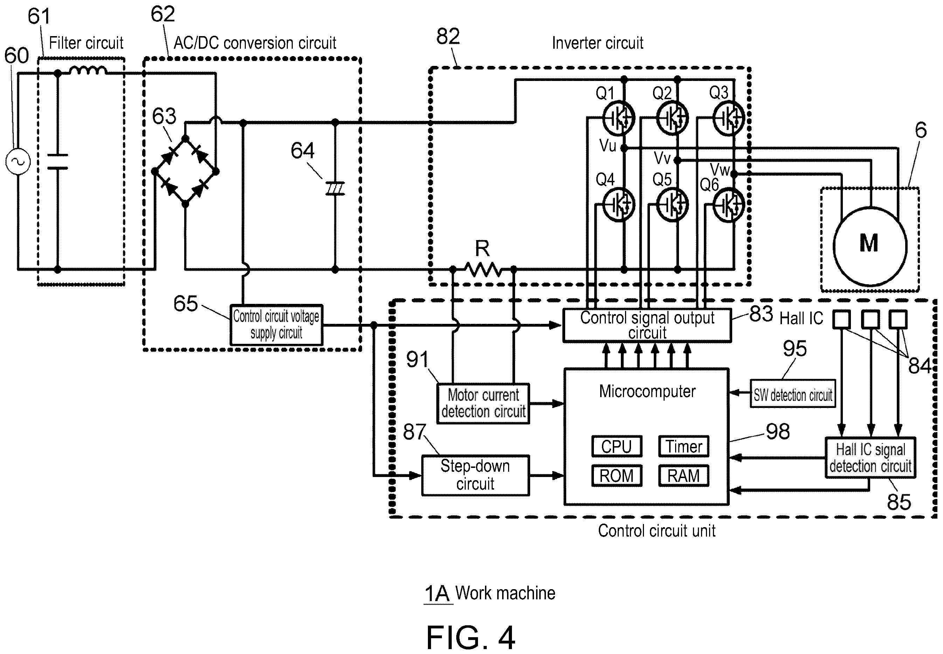

The embodiment is characterized by an overcurrent protection function (overload protection function) which will be described later. The overcurrent protection function is not limited to the battery-driven work machine 1, but can also be applied to an AC-driven work machine 1A as shown in FIG. 4.

FIG. 4 is a circuit block diagram of the AC-driven work machine 1A. The work machine 1A differs from the work machine 1 in that the work machine 1A operates with power (AC 100V) supplied from an external AC power supply 60 such as a commercial power supply, and that the circuit configuration has been changed accordingly, but the work machine 1A and the work machine 1 are the same in other respects.

The input voltage from the AC power supply 60 is supplied to an AC/DC conversion circuit 62 via a filter circuit 61. The AC/DC conversion circuit 62 includes a diode bridge 63 (full-wave rectifier circuit), a smoothing capacitor 64, and a control circuit voltage supply circuit 65. The control circuit voltage supply circuit 65 supplies the DC voltage after rectification and smoothing by the diode bridge 63 and the smoothing capacitor 64 to the control signal output circuit 83 and the step-down circuit 87.

The microcomputer 98 of the work machines 1 and 1A has an overcurrent protection function. In the case of a general overcurrent protection function, when an overcurrent state (overload state) occurs, the motor 6 is halted, and in order to drive the motor 6 again, the operating unit 10 has to be operated again. In a configuration in which the operating unit 10 has to be operated again every time an overcurrent state occurs, operability may be poor. Control to improve the point will be described below.

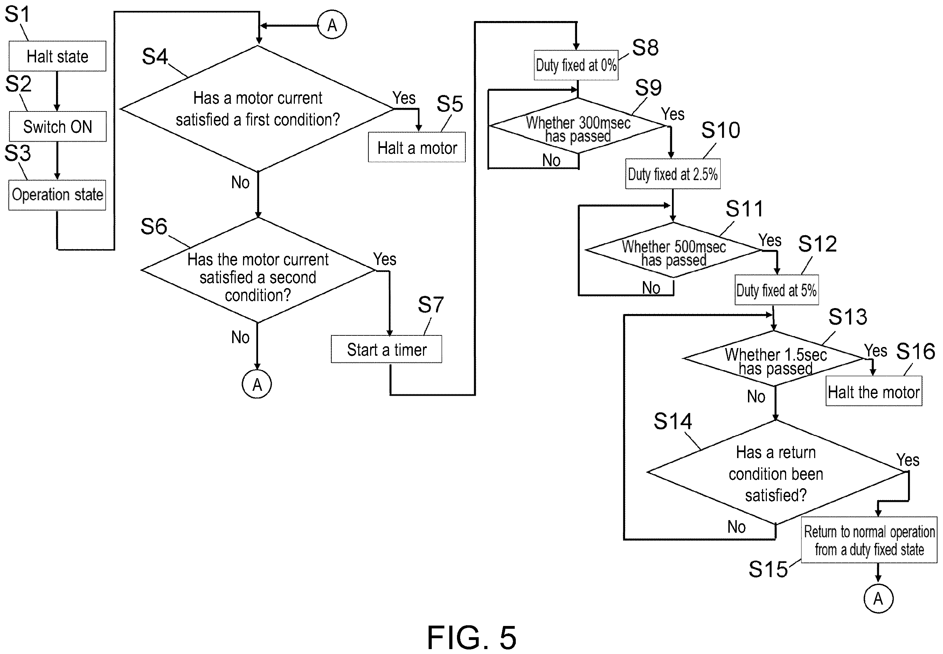

FIG. 5 is a flowchart showing a first example of control of the work machines 1 and 1A. When the switch 5 is turned on (S2) in a halt state (S1), the microcomputer 98 performs normal operation of driving the motor 6 at the preset rotation speed set by the speed setting dial 19 (S3). The normal operation corresponds to a first control in which the motor 6 is continuously driven. It is assumed that the switch 5 is always on from S2 onwards.

When the motor current satisfies a first condition for overcurrent protection (overload protection) (Yes in S4), the microcomputer 98 halts the inverter circuit 82 and halts the motor 6 (S5). The first condition is, for example, 180A/1ms or 150A/1ms in the case of the DC-driven work machine 1, and 100A/1ms in the case of the AC-driven work machine 1A. When the microcomputer 98 halts the motor 6 because the motor current satisfies the first condition, the microcomputer 98 makes it a necessary condition for restarting the drive of the motor 6 that the switch 5 is once turned off. Hereinafter, an overload state that satisfies the first condition will be referred to as a "first overload state." Further, the control (S5) for halting the motor 6 due to the first overload state will be referred to as "first overload protection control".

If the motor current does not satisfy the first condition for overcurrent protection (No in S4), the microcomputer 98 starts a timer (S7) when the motor current satisfies a second condition for overcurrent protection (Yes in S6). Satisfying the second condition corresponds to the motor 6 being in an overload state. In the case of the DC-driven work machine 1, the second condition is set in stages according to the current value and duration thereof, such as 130A/4ms, 100A/500ms, 90A/2s, 80A/4.3s, 75A/6s, 70A/10s, 65A/20s, and 60A/30s. The second condition is, for example, 90A/3ms in the case of the AC-driven work machine 1A. Hereinafter, an overload state that satisfies the second condition will be referred to as a "second overload state." Further, the control corresponding to the second overload state (S7 to S16) will be referred to as "second overload protection control."

The microcomputer 98 fixes the duty at 0% for 300 milliseconds (No in S8 and S9) from the start of the timer (S7). 300 milliseconds corresponds to predetermined time B. When 300 milliseconds have elapsed (Yes in S9) since the start of the timer (S7), the microcomputer 98 fixes the duty at 2.5% for 200 milliseconds thereafter, that is, by the time 500 milliseconds have elapsed (No in S10 and S11) since the start of the timer (S7). When 500 milliseconds have elapsed (Yes in S11) since the start of the timer (S7), the microcomputer 98 fixes the duty at 5% (S12).

The drive control of the motor 6 at a duty of 2.5% and the drive control of the motor 6 at a duty of 5% correspond to the second control. The second control is a control in which the output of the motor 6 is lower than in normal operation. The effective value of the motor applied voltage when the duty is 2.5% is an example of a second effective value and an example of a 2.1 effective value. The effective value of the motor applied voltage when the duty is 5% is an example of the second effective value and an example of a 2.2 effective value.

The effective value of the motor applied voltage in each case of duty 2.5% and 5% is such that the motor 6 rotates in a no-load state, but does not rotate in a loaded state. The no-load state is a state in which the grindstone 2 is not in contact with the workpiece.

Before the microcomputer 98 continues the state in which the duty is fixed at 5% for 1 second, that is, before 1.5 seconds have elapsed (No in S13) since the start of the timer (S7), and when a return condition described below is satisfied (Yes in S14), the duty is fixed at 5% and normal operation is resumed (S15), and the process returns to S4. The normal operation after the return in S15 corresponds to a third control. Note that the normal operation after the return in S15 may be different from the initial normal operation (S3) in duty, motor rotation speed, etc.

The return condition is, for example, that an event in which the three magnetic sensors 84 are switched on/off a total of 12 times or more within 100 milliseconds is detected twice. The return condition is based on the assumption that the rotor of the motor 6 has four poles. When the motor 6 makes one rotation (the rotor makes one rotation), the three magnetic sensors 84 are switched on/off 12 times in total. That is, the return condition is that an event in which the motor 6 rotates one or more times within 100 milliseconds is detected twice.

By the time 1.2 seconds (corresponding to predetermined time C) have elapsed from the start of control at the duty of 2.5% (S10), in other words, if the return condition is not satisfied by the time 1.5 seconds have elapsed (Yes in S13) since the start of the timer (S7), the microcomputer 98 halts the inverter circuit 82 and halts the motor 6 (S16).

The control shown in FIG. 5 is an example in which after the duty is fixed at 5% (after S12), it is checked (S14) whether the return condition is satisfied. That is, in the control shown in FIG. 5, when the return condition is satisfied with the duty fixed at 2.5%, this is an example in which normal operation is started after the execution time of control at a duty of 2.5% becomes 200 milliseconds (corresponding to predetermined time A) or more.

As another example of the control shown in FIG. 5, after the duty is fixed at 2.5% (after S10) and before the duty is fixed at 5% (before S12), it is checked whether the return condition is satisfied (same process as S14), and if the return condition is satisfied, normal operation may be resumed.

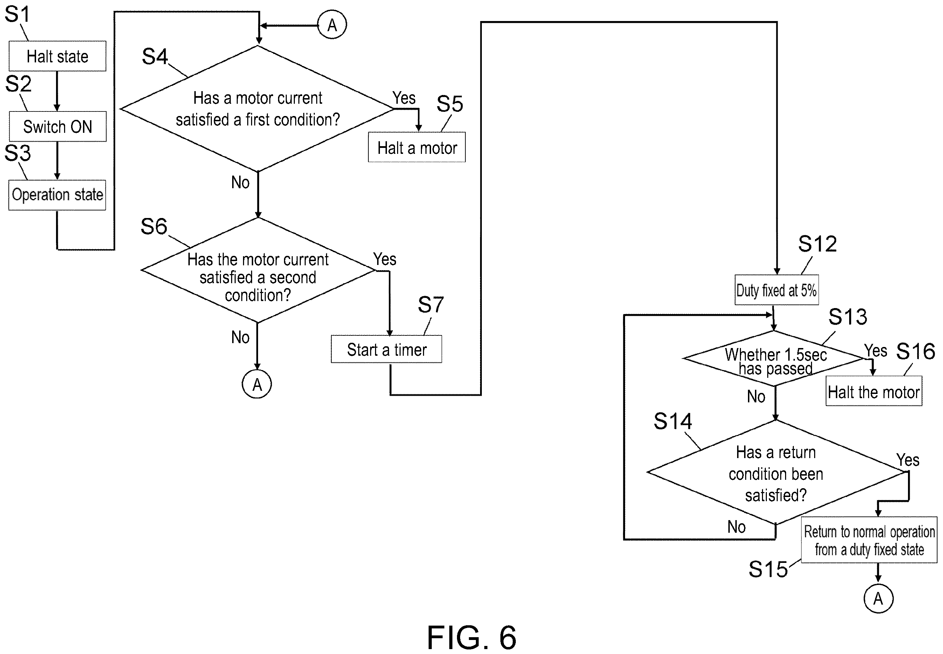

FIG. 6 is a flowchart showing a second example of control of the work machines 1 and 1A. The flowchart in FIG. 6 is the same as the flowchart in FIG. 5 without steps S8 to S11. The process flow from S1 to S7 in FIG. 6 is the same as the process flow from S1 to S7 in FIG. 5. The control shown in FIG. 6 is an example in which the effective value of the motor applied voltage is set constant in the second control.

After starting the timer (S7), the microcomputer 98 fixes the duty at 5% (S12). If the return condition is satisfied (Yes in S14) before 1.5 seconds have elapsed (No in S13) since the start of the timer (S7), the microcomputer 98 resumes normal operation from the state where the duty is fixed at 5% (S15), and the process returns to S4. If the return condition is not satisfied by the time 1.5 seconds (corresponding to the predetermined time C) have elapsed (Yes in S13) since the start of the timer (S7), the microcomputer 98 halts the inverter circuit 82 and halts the motor 6 (S16).

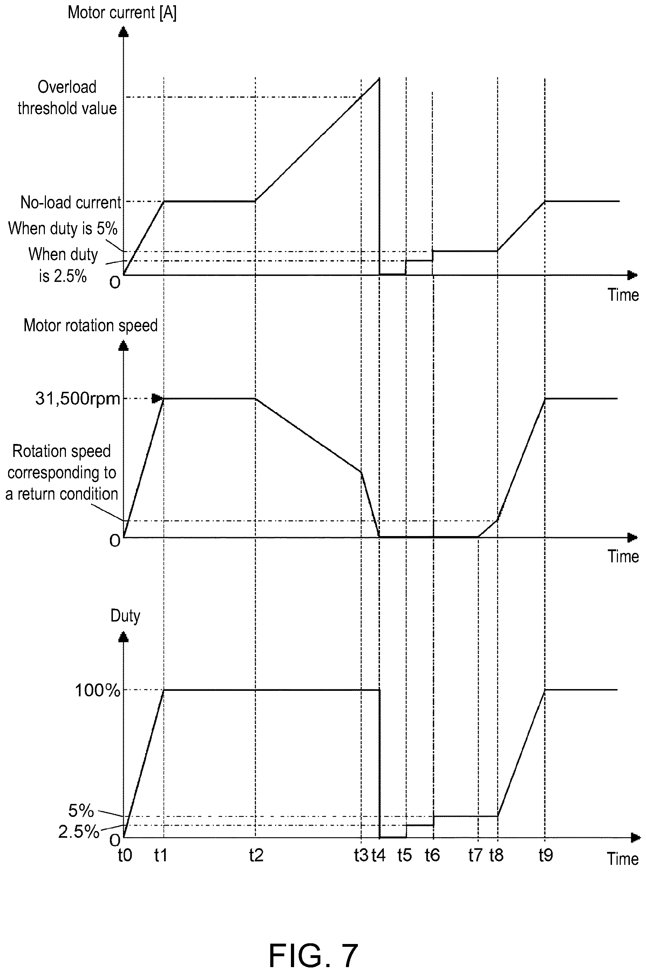

FIG. 7 is a time chart showing an example of the operation of the work machines 1 and 1A when the control shown in FIG. 5 is applied.

At time t0, the switch 5 is turned on, and the microcomputer 98 starts soft start control of motor 6. From time t0 onwards, the switch 5 is consistently on.

The period from time t0 to t1 is a soft start control period in which the duty gradually increases toward 100%, and the motor rotation speed and the motor current also gradually increase accordingly. The effective value of the motor applied voltage when the duty is 100% is an example of a first effective value.

The period from time t1 to t2 is a no-load operation period in which the duty is 100%, the motor rotation speed is the maximum rotation speed of 31,500 rpm, and the motor current is a no-load current.

The period from time t2 to t4 is a load increase period in which the user presses the grindstone 2 against the workpiece, and the load on the motor 6 increases. As a result, the motor current increases and the motor rotation speed decreases. Duty is kept at 100%.

At time t3 in the middle of the load increase period, the motor current becomes equal to or higher than a threshold value of overload protection. At time t4 when a predetermined time period corresponding to the threshold value has elapsed, the microcomputer 98 sets the duty to zero and halts the motor 6. In this way, the motor current is made to become zero.

The period from time t4 to t5 is a period of the duty being at 0% with a length of 300 milliseconds, and the motor rotation speed and the motor current are both zero.

The period from time t5 to t6 is a period of the duty being at 2.5% with a length of 200 milliseconds. Corresponding to the duty increasing to 2.5% at time t5, the motor current also increases.

The period of one second from time t6 is a period of the duty being at 5%. At time t6, the motor current also increases in response to the increase in duty to 5%. Note that if the return condition is satisfied during the period of the duty being at 5%, the microcomputer 98 increases the duty and returns to normal operation without waiting for 1 second to elapse from time t6.

At time t7, the user releases the grindstone 2 from the workpiece, and the motor rotation speed begins to increase.

At time t8, before one second has elapsed from time t6, the microcomputer 98 detects that the return condition is satisfied and restarts the soft start control of the motor 6.

The period from time t8 to t9 is a soft start control period in which the duty gradually increases toward 100%, and the motor rotation speed and the motor current also gradually increase accordingly.

The period from time t9 is a no-load operation period in which the duty is 100%, the motor rotation speed is the maximum rotation speed of 31,500 rpm, and the motor current is a no-load current.

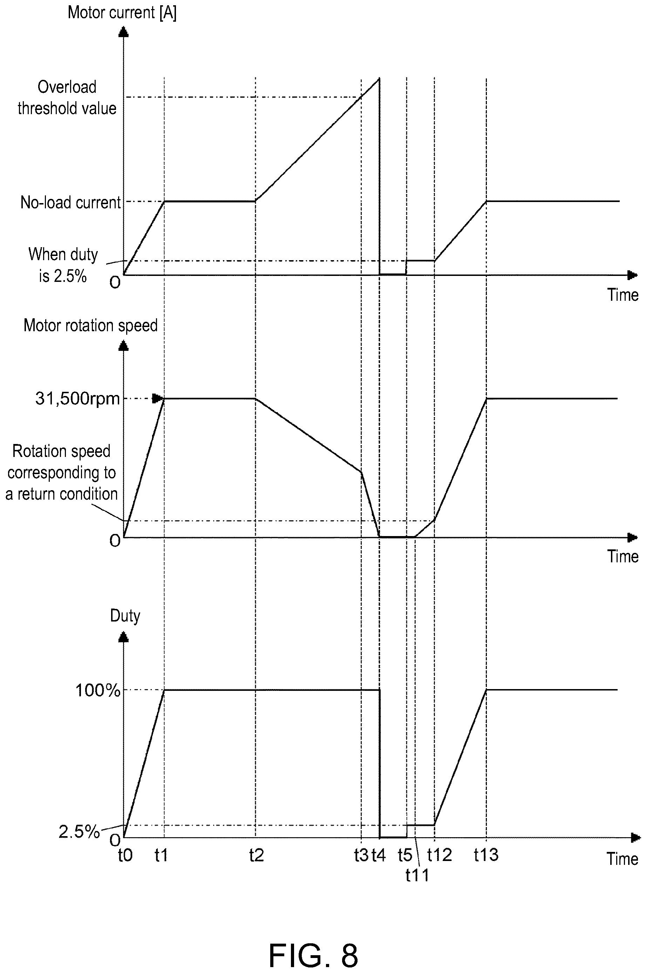

FIG. 8 is a time chart showing an example of the operation of the work machines 1 and 1A when another example of the control shown in FIG. 5 (an example with a return to normal operation from a duty of 2.5%) is applied. The operation during the period t0 to t5 in FIG. 8 is the same as the operation during the period t0 to t5 in FIG. 7.

A period of 200 milliseconds from time t5 is a period of the duty being at 2.5%. Corresponding to the duty increasing to 2.5% at time t5, the motor current also increases. Note that if the return condition is satisfied during the period of the duty being at 2.5%, the microcomputer 98 increases the duty and returns to normal operation without waiting for 200 milliseconds to elapse from time t5.

At time t11, the user releases the grindstone 2 from the workpiece, and the motor rotation speed begins to increase.

At time t12, before 200 milliseconds have elapsed from time t5, the microcomputer 98 detects that the return condition is satisfied and restarts the soft start control of the motor 6.

The period from time t12 to t13 is a soft start control period in which the duty gradually increases toward 100%, and the motor rotation speed and the motor current also gradually increase accordingly.

The period from time t13 is a no-load operation period in which the duty is 100%, the motor rotation speed is the maximum rotation speed of 31,500 rpm, and the motor current is a no-load current.

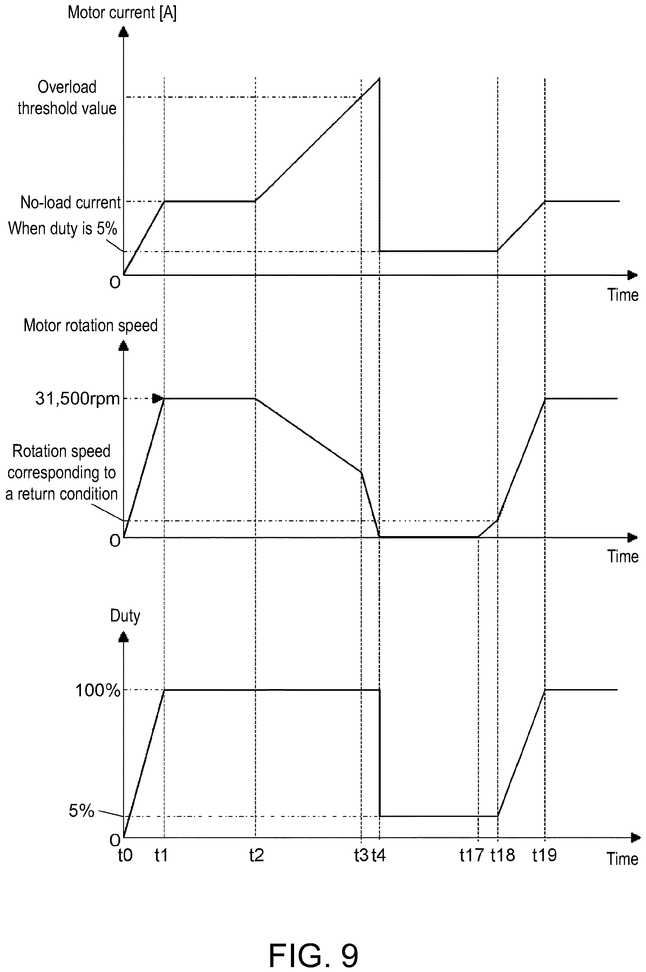

FIG. 9 is a time chart showing an example of the operation of the work machines 1 and 1A when the control shown in FIG. 6 is applied. The operation in the period from t0 to just before t4 in FIG. 9 is the same as the operation in the period from t0 to just before t4 in FIG. 7.

At time t4, the microcomputer 98 reduces the duty to 5%. Accordingly, the motor rotation speed and the motor current also decrease.

The period of 1.5 seconds from time t4 is a period of the duty being at 5%. Note that if the return condition is satisfied during the period of the duty being at 5%, the microcomputer 98 increases the duty and returns to normal operation without waiting for 1.5 seconds to elapse from time t4.

At time t17, the user releases the grindstone 2 from the workpiece, and the motor rotation speed begins to increase.

At time t18, before 1.5 seconds have elapsed from time t4, the microcomputer 98 detects that the return condition is satisfied and restarts the soft start control of the motor 6.

The period from time t18 to t19 is a soft start control period in which the duty gradually increases toward 100%, and the motor rotation speed and the motor current also gradually increase accordingly.

The period from time t19 is a no-load operation period in which the duty is 100%, the motor rotation speed is the maximum rotation speed of 31,500 rpm, and the motor current is a no-load current.

According to the embodiment, the following effects may be obtained.
(1) The microcomputer 98 is configured to perform control such that the motor 6 is driven continuously by normal operation during a single drive operation of the operating unit 10, the duty is reduced with respect to normal operation when the motor 6 enters the second overload state, and normal operation is resumed when rotation of the motor 6 is detected. Therefore, if the pressing force of the grindstone 2 against the workpiece is too strong and the motor 6 is halted due to the second overload state, if the user releases the grindstone 2 from the workpiece, the motor 6 can be driven again and the work can be resumed without having to perform the drive operation of the operating unit 10 again. Therefore, the work machines 1 and 1A have good operability and workability.
(2) In the case of the control shown in FIG. 5, when entering the second overload state, the microcomputer 98 temporarily sets the duty to zero and then increases the duty to 2.5%, so the heat generated while the duty is set to zero is small, and the occurrence of high temperature abnormalities can be suppressed. Note that there is a delay at least corresponding to the reaction time from when the user recognizes that the motor 6 has halted due to the second overload protection control until the user releases the grindstone 2 from the workpiece. Since halting the motor 6 due to the second overload protection control is an unexpected event for the user, the delay is considerably longer than the reaction time. Therefore, even if the duty is set to zero for a predetermined period of time corresponding to the delay after the second overload state is detected, the disadvantage of the long waiting time from when the user releases the grindstone 2 from the workpiece until the drive of the motor 6 is resumed is limited.
(3) In the case of the control shown in FIG. 5, the microcomputer 98 enters the second overload state and temporarily sets the duty to zero, and then since the duty is temporarily set to 2.5% and then increased to 5%, the heat generated while the duty is set to 2.5% is small, thereby suppressing the occurrence of high temperature abnormalities.
(4) In the case of the control shown in FIG. 6, the microcomputer 98 immediately reduces the duty to 5% when an overload state (an overcurrent state that satisfies the second condition) occurs, thereafter, the duty is maintained at 5% until the return condition is satisfied or until the return condition is not satisfied and the duty is set to zero. Therefore, control by the microcomputer 98 becomes simple. Furthermore, when the duty is 5%, the time from when the user releases the grindstone 2 from the workpiece until the return condition is satisfied is shorter than when the duty is 2.5%, so the waiting time from when the user releases the grindstone 2 from the workpiece until the drive of the motor 6 is resumed can be shortened.
(5) In the second overload control, the microcomputer 98 sets the effective value of the motor applied voltage to a value such that the motor 6 rotates in a no-load state, but does not rotate in a loaded state. Therefore, the return condition is not satisfied unless the grindstone 2 is reliably released from the workpiece. Therefore, work can be resumed from a no-load state, and operability and workability are good.

Although the present invention has been described above by using the embodiments as examples, those skilled in the art will understand that various modifications can be made to each component and each processing process of the embodiments within the scope of the claims. A modified example will be discussed below.

As a modification of the control shown in FIG. 5, the microcomputer 98 may continuously increase the duty from zero to 5% after starting the timer (S7), or the duty may be divided into three or more stages and increased stepwise toward 5%. The operating unit 10 is not limited to the slide type illustrated in the embodiment, but may be a paddle type or a trigger type. The work machine of the present invention is not limited to the grinder exemplified in the embodiment, and may be of other types such as a circular saw. The present invention can be suitably applied to a work machine that starts work from a no-load state in which the work unit is not in contact with the workpiece.

Specific contents of the first condition and the second condition and the return condition illustrated in the embodiment, and the motor rotation speed, duty, motor current, various threshold values, time, etc. illustrated as specific numerical values in the embodiment do not limit the scope of the invention in any way and can be arbitrarily changed according to required specifications.

### Reference Signs List

1, 1A... Work machine; 2... Grindstone (rotary tool); 3... Housing; 4... Gear case; 5... Switch; 6... Motor (brushless motor); 6a... Output shaft; 7...Battery (battery pack); 8...Fan; 9...Control board; 10...Operating unit; 11...Packing land; 12...Needle bearing; 13...Ball bearing; 14... Wheel guard; 17... Slide bar; 18... Locking convex unit; 19... Speed setting dial; 20... Spindle; 21... First bevel gear; 22... Second bevel gear; 60... AC power supply; 61... Filter circuit; 62... AC/DC conversion circuit; 63... Diode bridge (full wave rectifier circuit); 64... Smoothing capacitor; 65... Control circuit voltage supply circuit; 80... Control circuit unit; 82... Inverter circuit; 83... Control signal output circuit; 84... Magnetic sensor, 85... Rotor position detection circuit; 86... Temperature detection circuit; 87... Step-down circuit; 88... Control system power supply circuit; 89... Battery voltage detection circuit; 90... Over discharge detection circuit; 91... Current detection circuit; 92... Communication circuit; 93... Battery temperature detection circuit; 94... Acceleration detection circuit; 95... Switch detection circuit; 96... Preset rotation speed detection circuit; 98... Microcomputer (microcontroller).

## Claims

1. A work machine, comprising:
a motor; a work unit, configured to be driven by the motor and be capable of performing predetermined work;
a control unit, configured to control the motor;
an operating unit, configured to instruct the control unit to drive/halt the motor; and
a rotation detection unit, detecting rotation of the motor, wherein
the control unit is configured to execute a first control for continuously driving the motor during a single drive operation of the operating unit, shift to a second control in which output of the motor is lower than the first control when the motor becomes overloaded, and shift to a third control in which the output of the motor is higher than the second control when the rotation of the motor is detected by the rotation detection unit.

2. The work machine according to claim 1, wherein the control unit is configured to change the output of the motor depending on a voltage applied to the motor.

3. The work machine according to claim 2, wherein the control unit is configured to set an effective value of the voltage applied to the motor constant in the second control.

4. The work machine according to claim 2, wherein an effective value of the voltage applied to the motor in the first control is a first effective value,
an effective value of the voltage applied to the motor in the second control is a second effective value, and the control unit is configured to change the second effective value within a range lower than the first effective value.

5. The work machine according to claim 4, wherein the control unit is configured to set the second effective value to a 2.1 effective value and then set the second effective value to a 2.2 effective value larger than the 2.1 effective value.

6. The work machine according to claim 5, wherein the control unit is configured to shift to the third control at a timing when the rotation of the motor is detected when the rotation of the motor is detected by the rotation detection unit during execution of control based on the 2.1 effective value or during execution of control based on the 2.2 effective value.

7. The work machine according to claim 5, wherein the control unit is configured to shift to the third control after execution time of the control based on the 2.1 effective value becomes predetermined time A or more when the rotation of the motor is detected by the rotation detection unit during the execution of the control based on the 2.1 effective value.

8. The work machine according to claim 2, wherein the control unit is configured to set the effective value of the voltage applied to the motor to zero during predetermined time B when shifting from the first control to the second control.

9. The work machine according to claim 2, wherein the control unit is configured to set the effective value of the voltage applied to the motor to zero when the rotation of the motor is not detected by the rotation detection unit by the time execution time of the second control reaches predetermined time C.

10. The work machine according to claim 2, wherein the effective value of the voltage applied to the motor in the second control is such that the motor rotates in a no-load state, but does not rotate in a loaded state.

11. The work machine according to claim 1, further comprising a current detection unit which detects a current flowing through the motor,
wherein the control unit detects an overload state of the motor based on a current flowing through the motor.
